# EUROPEAN PATENT APPLICATION

(11) **EP 1 640 852 A1**
(43) Date of publication of application: **29.03.2006**
(21) Application number: 04746818.6
(22) Date of filing: 25.06.2004
(51) Int. Cl.: G06F 3/033

(54) **COMMAND INPUT DEVICE USING TOUCH PANEL DISPLAY**

(71) Applicant: MATSUSHITA ELECTRIC INDUSTRIAL CO., LTD., Osaka 5718501 (JP)
(72) Inventor: NIIJIMA, Hiroyuki, Kanagawa 2290003 (JP)
(74) Representative: Pautex Schneider, Nicole Véronique
(86) International application number: PCT/JP2004/009349
(87) International publication number: WO 2006/001070

(57) **Abstract**

Contact time detection means (101) for detecting a time period for which a finger is in continual contact with a touch panel display (100), contact number detection means (102) for detecting the number of times a finger touched the touch panel display (100), and contact interval detection means (103) for detecting a time period between when the finger is detached form the touch panel display (100) and when the finger is brought into contact therewith afterwards are provided and based on these detection results, an input command is determined. Various commands can thereby be inputted without a visual check.

## Description

### TECHNICAL FIELD

The present invention relates to a command input device using a touch panel display, and particularly, to a command input device suitable for an on-vehicle navigation device.

### BACKGROUND ART

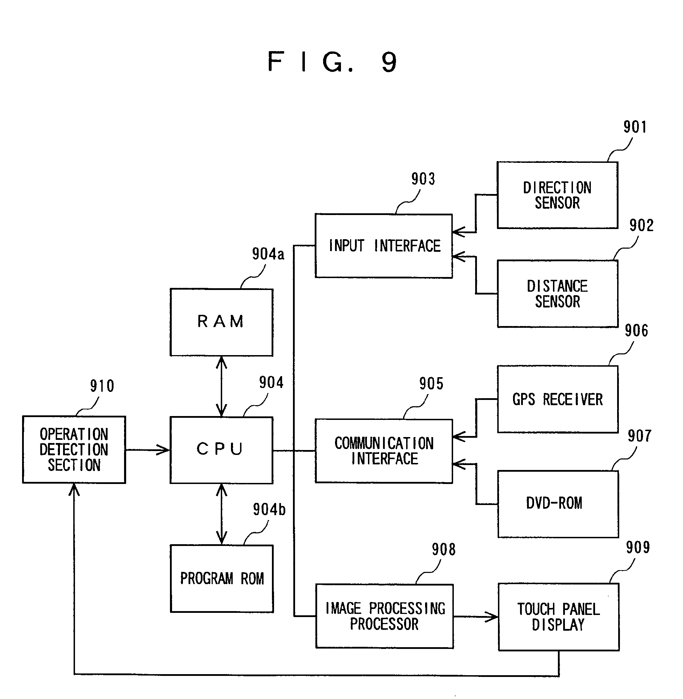

A conventional navigation device will be described with reference to FIG. 9. Data outputted from a direction sensor 301 and data outputted from a distance sensor 902 are supplied to a CPU 904 through an input interface 903. The CPU 904 obtains a direction of a vehicle, a traveling path, and so on, based on these data. Further, absolute position information obtained from a GPS receiver 906 and map data stored in a DVD-ROM 907 are supplied to the CPU 904 via a communication interface 905. In accordance with a program stored in a program ROM 904a, the CPU 904 suitably uses a RAM 904b to calculate the current location of the vehicle based on the above-described various data.

Further, in accordance with the program stored in the program ROM 904a, the CPU 904 suitably uses the RAM 904b to control an image processing processor 908 and a touch panel display 909 such that a map and the location of the vehicle are displayed based on the current location of the vehicle calculated in accordance with the program stored in the program ROM 904a, the map data read out from the DVD-ROM 907, and a user's command inputted from the touch panel display 909 through an operation detection section 910. The operation detection section 910 detects whether a finger is in contact with the touch panel display 909, and also detects coordinates of a contact position.

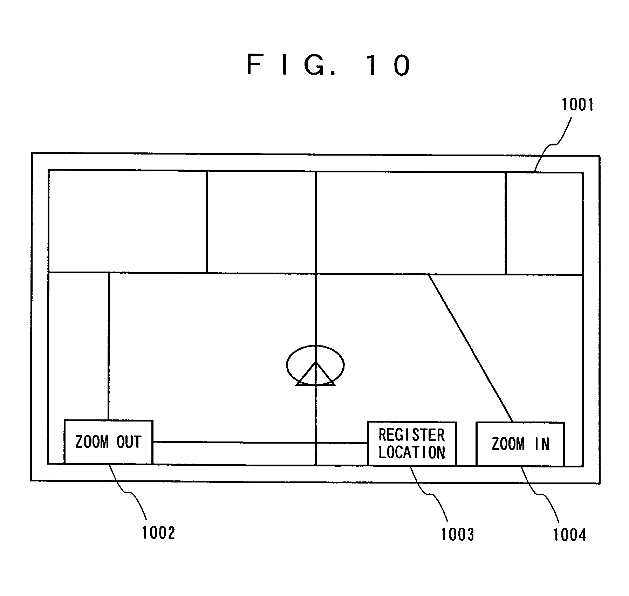

In FIG. 10, an exemplary image to be displayed on the touch panel display 909 is illustrated. As illustrated in FIG. 10, operation buttons 1002, 1003, and 1004 are displayed on a display screen 1001 of the touch panel display 909. The operation buttons 1002, 1003, and 1004 are each assigned to a predetermined command, and a user inputs a desired command by placing his or her finger in contact with one of these operation buttons.

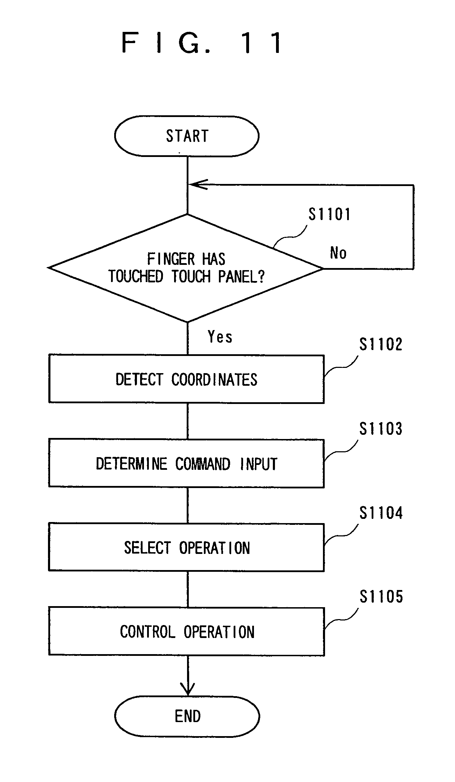

Hereinafter, with reference to a flowchart of FIG. 11, a process performed by the CPU 904 on the user's command input will be described in detail. First, the CPU 904 determines whether a finger is touching the touch panel display 909 based on an output from the operation detection section 910 (S1101), and if a finger is in touch therewith, detects coordinates of the contact position (S1102). Next, a command corresponding to the coordinates is determined (S1103) and an operation associated with the determined command (e.g., zoom in map) is selected (S1104). Then, a control for executing the selected operation is carried out (S1105).

Note that, in addition to the above-described method for inputting a command by pressing an operation button, there is also a conventional method for inputting a desired command by sliding a finger on a display screen of a touch panel display (refer to Japanese Laid-Open Patent Publication Nos. 11-85398, 10-141974, and 11-102274, for example).

### DISCLOSURE OF THE INVENTION

However, in the case where a command is inputted by using an operation button displayed on a touch panel display, it is required for a driver who is a user to visually check the display screen of the touch panel display for checking the position of an operation button corresponding to the desired command. Therefore, it is very dangerous to input a command while driving. Furthermore, if a moving vehicle jolts, there is a possibility that an operation button might be erroneously pressed.

Further, even in the case where a finger is slid on a display screen of a touch panel display, there are some limitations regarding, for example, a start or end position of the finger sliding, and therefore it is difficult to input a desired command without looking at the display screen of the touch panel display at all. Furthermore, if a moving vehicle jolts, there is a possibility that an erroneous path might be traced.

The present invention is made to solve the above-described conventional problems, and an obj ect thereof is to provide a command input device which, in the case where a driver inputs a command while driving, does not require the driver to glance at the touch panel display, and even in the case where the vehicle vibrates, the command can be accurately inputted thereto.

The command input device using the touch panel display of the present invention includes contact time detection means for detecting a time period for which a finger or a pen is in continual contact with the touch panel display; contact number detection means for detecting the number of times a finger or a pen touched the touch panel display; contact interval detection means for detecting a time period between when the finger or the pen is detached from the touch panel display and when a finger or a pen is brought into contact therewith afterwards; input determination means for determining an input command based on detection results obtained from the contact time detection means, the contact number detection means, and the contact interval detection means; operation selection means for selecting, among predetermined operations, an operation associated with the input command based on the input command determined by the input determination means; and operation control means for executing the operation selected by the operation selection means.

Through this configuration, a command can be inputted based on a time period for which to bring a finger or a pen into contact with the touch panel display, the number of contacts, and a time interval between the contacts, thus making it possible to input various commands without a visual check.

Further, with the command input device using the touch panel display of the present invention, a determination result obtained from the input determination means is unaffected by the contact position of the finger or the pen on the touch panel display.

Through this configuration, the user can input a command by putting a finger at an arbitrary position on the touch panel display, thus making it easy to input the command without looking at the touch panel display at all.

Additionally, the command input device using the touch panel display of the presentinvention further includes input combination setting means for arbitrarily setting association relationships between detection results obtained from the contact time detection means, the contact number detection means, and the contact interval detection means and an input command determined, based on the detection results, by the input determination means.

Through this configuration, the user can arbitrarily set combinations of a time period for which to bring a finger or a pen into contact with the touch panel display, the number of contacts, and a time interval between the contacts.

Additionally, the command input device using the touch panel display of the present invention further includes operation setting means for arbitrarily setting association relationships between an input command determined by the input determination means and a control command determined, based on the input command, by the operation selection means.

Through this configuration, the user can assign an arbitrary operation to a predetermined command.

Additionally, the command input device using the touch panel display of the present invention further includes vibration detection means for detecting vibration and erroneous operation preventing means for preventing a chattering effect when a finger or a pen touches the touch panel; a time interval between contacts of a finger or a pen to be determined, by the erroneous operation preventing means, as chattering varies depending on a detection result obtained from the vibration detection means.

Through this configuration, a time interval between contacts to be determined as chattering varies depending on vibration of a vehicle, for example, while at a stop, the time interval between contacts to be determined as chattering is shortened and while driving on a gravel road, the time interval between contacts to be determined as chattering is lengthened, allowing an optimum chattering preventing process in accordance with a state of the vehicle.

Further, with the command input device using the touch panel display of the present invention, the contact time detection means distinguishes between two or more states in accordance with the time length of continual contact.

Through this configuration, commands can be distinguished based on the time length of continual contact, allowing more variety of commands to be inputted.

Further, with the command input device using the touch panel display of the present invention, the contact time detection means can arbitrarily set a length by which the time period of continual contact is distinguished.

Through this configuration, the user can arbitrarily set a threshold for determining the contact time period, and therefore, the user can perform an input operation in accordance with his or her feeling.

Further, with the command input device using the touch panel display of the present invention, the contact interval detection means can arbitrarily set an end time to be set for a command input.

Through this configuration, a waiting time period spending until the end of command input can be adjusted to satisfy the user's request.

### BRIEF DESCRIPTION OF THE DRAWINGS

FIG. 1 is a block diagram of a command input device according to a first embodiment of the present invention.
FIG. 2 is a diagram illustrating contact time periods for which a finger is on a touch panel display 100, the number of contacts, and intervals between contacts in the first embodiment of the present invention.
FIG. 3 is a diagram exemplary illustrating a table referred to by an input determination means 104 according to the first embodiment of the present invention.
FIG. 4 is a diagram exemplary illustrating a table referred to by an operation selection means 105 according to the first embodiment of the present invention.
FIG. 5 is a flow diagram used for explaining an operation of a command input device according to the first embodiment of the present invention.
FIG. 6 is a block diagram illustrating a command input device according to a second embodiment of the present invention.
FIG. 7 is a diagram illustrating a time interval between contacts due to chattering between a touch panel display 100 and a finger in the second embodiment of the present invention.
FIG. 8 is a diagram illustrating intervals between contacts to be determined, by erroneous operation preventing means 610, as chattering in the second embodiment of the present invention.
FIG. 9 is a block diagram of a conventional car navigation device.
FIG. 10 is a diagram exemplary illustrating a display screen of a touch panel display 909 of the conventional car navigation device.
FIG. 11 is a flow diagram used for explaining an operation regarding a command input of the conventional car navigation device.

### BEST MODE FOR CARRYING OUT THE INVENTION

Hereinafter, various embodiments of the present invention will be described with reference to the drawings.

### (first embodiment)

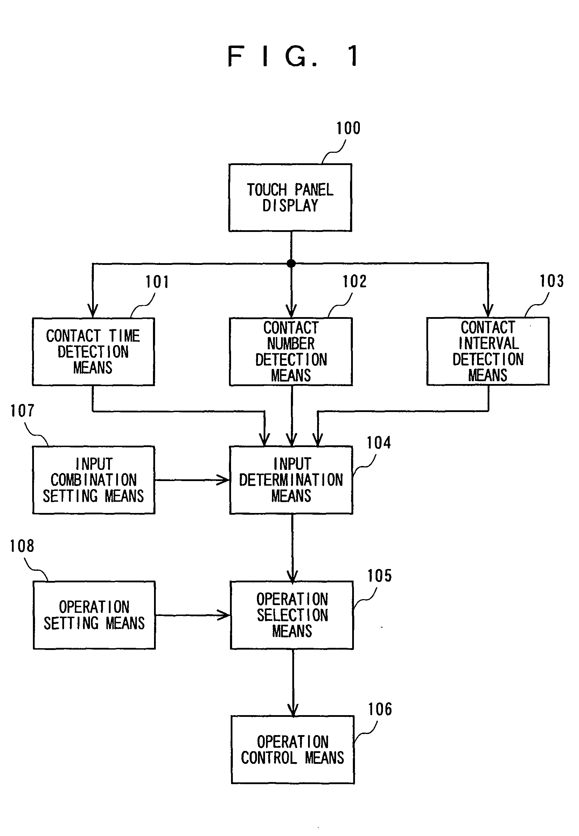

A configuration of a command input device according to a first embodiment of the present invention is illustrated in FIG. 1.

In FIG. 1, the command input device includes: a touch panel display 100; contact time detection means 101 for detecting a time period for which a finger (or a pen; omitted hereinafter) is in continual contact with the touch panel display 100; contact number detection means 102 for detecting the number of times a finger has touched the touch panel display 100; contact interval detection means 103 for detecting a time period between when the finger is detached from the touch panel display 100 and when a finger is brought into contact therewith afterwards; input determination means 104 for determining an input command based on detection results obtained from the contact time detection means 101, the contact number detection means 102, and the contact interval detection means 103; operation selection means 105 for selecting, from among predetermined operations, an operation associated with the input command based on the input command determined by the input determination means 104; operation control means 106 for executing the operation selected by the operation selection means 105; input combination setting means 107 for arbitrarily setting association relationships between the detection results obtained from the contact time detection means 101, the contact number detection means 102, and the contact interval detection means 103, and the input command determined by the input determination means 104; and operation setting means 108 for arbitrarily setting association relationships between the input command determined by the input determination means 104 and the operation selected by the operation selection means 105.

The operation of the command input device of the present embodiment configured as above is described.

A signal indicating whether a finger is in contact with the display screen is supplied from the touch panel display 100 to each of the contact time detection means 101, the contact number detection means 102, and the contact interval detection means 103. Note that a commonly-used touch panel display has a function of outputting coordinates of a contact position of the finger, but in the present invention, such a function is not particularly required. However, a touch panel display having such a function may well be used.

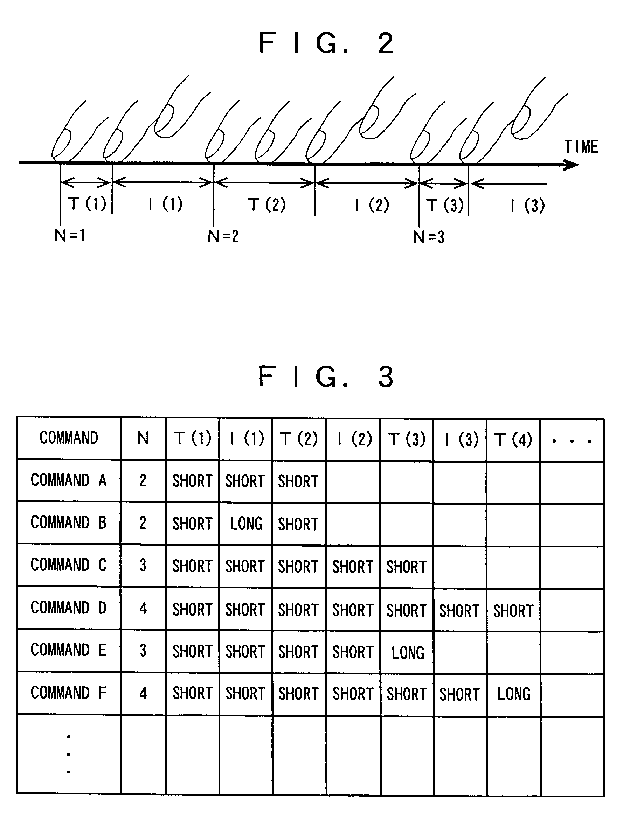

The contact time detection means 101 detects, based on the signal from the touch panel display 100, a time period for which a finger is in contact with the touch panel display 100. The time period corresponds to, for example, T(1), T(2), or T(3), as shown in FIG. 2. Note that FIG. 2 illustrates in time sequence a state where a finger touches the touch panel display 100 three times.

The contact number detection means 102 detects, based on the signal from the touch panel display 100, the number of times a finger has touched the touch panel display 100. The number of times corresponds to N as shown in FIG. 2, for example.

The contact interval detection means 103 detects, based on the signal from the touch panel display 100, the time period between when the finger is detached from the touch panel display 100 and when a finger is brought into contact therewith afterwards. The time period corresponds to I(1), I(2), or I(3) as shown in FIG. 2, for example.

The input determination means 104 determines, based on, for example, a prearranged table shown in FIG. 3, a command corresponding to the detection results obtained from the contact time detection means 101, the contact number detection means 102, and the contact interval detection means 103 . Note that, in FIG. 3, time periods (T(1), T(2), T(3), ...) detected by the contact time detection means 101 and time periods (I(1), I(2), I(3), ...) detected by the contact interval detection means 103 are indicated as either "long" or "short". That is, in the example of FIG. 3, if the time periods detected by the contact time detection means 101 or the contact interval detection means 103 are longer than a predetermined threshold (for example, one second), they are indicated as "long" and, if shorter, they are indicated as "short". Although, in the present embodiment, the time periods detected by the contact time detection means 101 or the contact interval detection means 103 are evaluated based on whether they are longer or shorter than a predetermined threshold, the present invention is not limited thereto, and two thresholds may be used to divide the detected time period into three, i.e., "short", "middle", and "long", or more for evaluation. Furthermore, the threshold may be set and changed by the user.

The operation of the input determination means 104 is described in more detail. In the case where the user presses the touch panel display 100 with a finger in a manner, "short-tap, short-tap", the input determination means 104 determines that a command inputted by the user is command A, based on the table shown in FIG. 3. In the case where the user presses the touch panel display 100 with a finger in a manner, "short-tap, (pause), short-tap", the input determination means 104 determines that a command inputted by the user is command B. Further, when the user presses the touch panel display 100 with a finger in a manner, "short-tap, short-tap, short-tap", the input determination means 104 determines that a command inputted by the user is command C. When the user presses the touch panel display 100 with a finger in a manner, "short-tap, short-tap, long-tap", the input determination means 104 determines that a command inputted by the user is command E.

Note that the command input device of the present embodiment is provided with the input combination setting means 107 for arbitrarily setting the table shown in FIG. 3. Therefore, the user can set combinations of a time period for which to bring a finger into contact with the touch panel display 100, the number of contacts, and a time interval between the contacts.

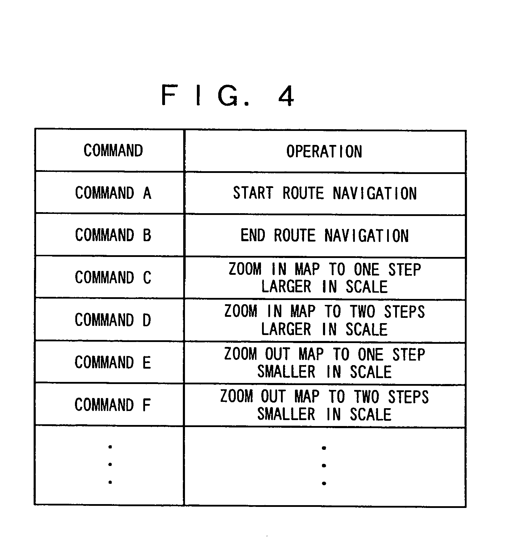

The operation selection means 105 selects, based on, for example, a prearranged table shown in FIG. 4, an operation corresponding to a determination result obtained from the input determination means 104. In more specific description, when the determination result obtained from the input determination means 104 is the command A, "start route guidance" is selected based on the table shown in FIG. 4. When the determination result obtained from the input determination means 104 is the command B, "end route guidance" is selected based on the table shown in FIG. 4. When the determination result obtained from the input determination means 104 is the command C, "zoom in map to one step larger in scale" is selected based on the table shown in FIG. 4. When the determined result obtained from the input determination means 104 is the command F, "zoom out map to two steps smaller in scale" is selected based on the table shown in FIG. 4.

Note that, with the command input device of the present embodiment, the operation setting means 108 is provided for arbitrarily setting the table shown in FIG. 4. Therefore, the user can assign an arbitrary operation to a predetermined command.

The operation control means 106 executes the operation selected by the operation selection means 105. For example, route guidance is started or a map is zoomed in to one step larger in scale.

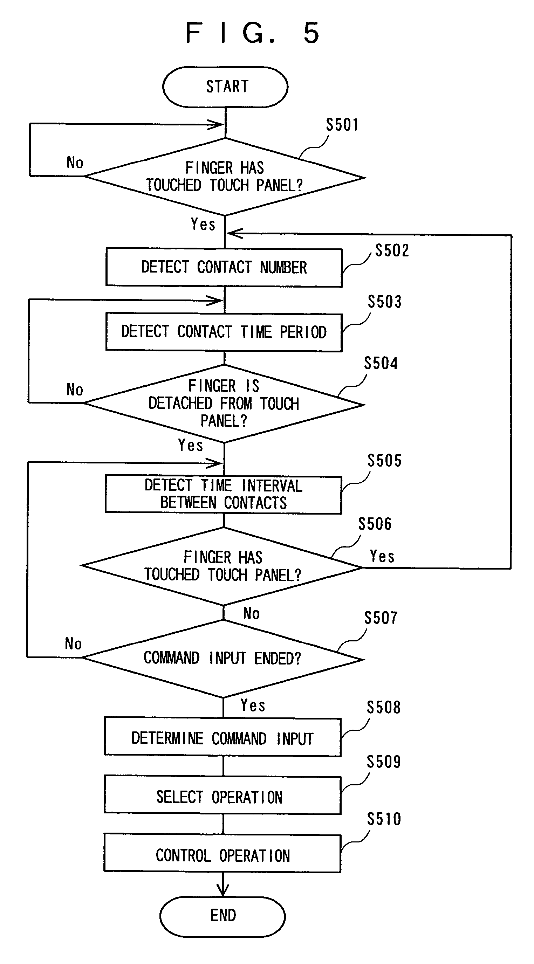

Note that the contact time detection means 101, the contact number detection means 102, the contact interval detection means 103, the input determination means 104, the operation selection means 105, and the operation control means 106 may be realized by hardware or by combinations of hardware and software such as a CPU 904, a RAM 904a, and a program ROM 904b as illustrated in FIG. 9. A process flow of a CPU in the case where the configuration is realized by the CPU and a program is illustrated in FIG. 5.

First, the CPU determines whether a finger has touched the touch panel display 100, based on a signal from the touch panel display 100 (S501). Then, in the case where a finger has touched it, the number of contacts is detected in step S502. Specifically, the number of contacts N is incremented. For example, assuming that the initial value of N is 0, when the process proceeds from step S501 to step S502, the number of contacts N is set to 1.

The CPU detects a contact time period at step S503. Specifically, a contact time period T(N) is counted. Note that N is the same as the number of contacts N. Further, the CPU determines, based on the signal from the touch panel display 100, whether the finger is detached from the touch panel display 100 at step S504, and proceeds to step S505 if the finger has not been detached, or returns to step S503 if the finger has not been detached. In other words, the contact time period T(N) is caused to be counted continuously until the finger is detached from the touch panel display 100.

The CPU detects a time interval between contacts at step S505. Specifically, a time interval between contacts I(N) is counted. Note that N is the same as the number of contacts N. Further, the CPU determines, based on the signal from the touch panel display 100, whether a finger has touched the touch panel display 100 at step S506, and returns to step S502 if a finger has touched it, or proceeds to step S507 if a finger has not touched it. At step S507, whether a command input by the user has ended is determined, and if the command input has ended, the CPU proceeds to step S508, or if not ended, returns to step S505. Note that various methods are conceivable for determining whether a command input has ended. For example, a command input may be determined as having ended after a predetermined time (which may be changeable by the user) has elapsed since the user's finger has been detached from the touch panel display 100.

Through the above-described steps S505 to S507, the time interval between contacts I (N) is continuously counted from when the finger is detached from the touch panel display 100 until the next time a finger touches the display. In the case where a finger touches the touch panel display 100 at step S506, the control returns to step S502 and the number of contacts N is incremented for executing a similar process. As a result, contact time periods T(2) and T(3), and intervals between contacts I(2) and I(3) are sequentially detected.

In the case where the command input has ended at step S507, the CPU determines the command based on N, T(1), T(2), I(1), I(2), and so on, which are detected by the above-described process, and the table shown in FIG . 3(S508). Further, an operation is selected based on the command determined at step S508 and the table shown in FIG. 4 (S509), and a control associated with the operation is carried out (S510).

As aforementioned, the command input device according to the first embodiment of the present invention is provided with the contact time detection means for detecting a time period for which a finger is in continual contact with the touch panel display; the contact number detection means for detecting the number of times a finger touched the touch panel display; the contact interval detection means for detecting a time period between when the finger is detached from the touch panel display and when a finger is brought into contact therewith afterwards; and the input determination means for determining an input command based on the detection results obtained from the contact time detection means, the contact number detection means, and the contact interval detection means, and therefore, it is possible to input a command based on a time period for which to bring a finger into contact with the touch panel display, the number of contacts, and a time interval between the contacts, such that various commands can be inputted without a visual check. Moreover, the user can input by touching an arbitrary position on the touch panel display with his/her finger, and therefore, it becomes easy to input a command without looking at the touch panel display at all.

### (second embodiment)

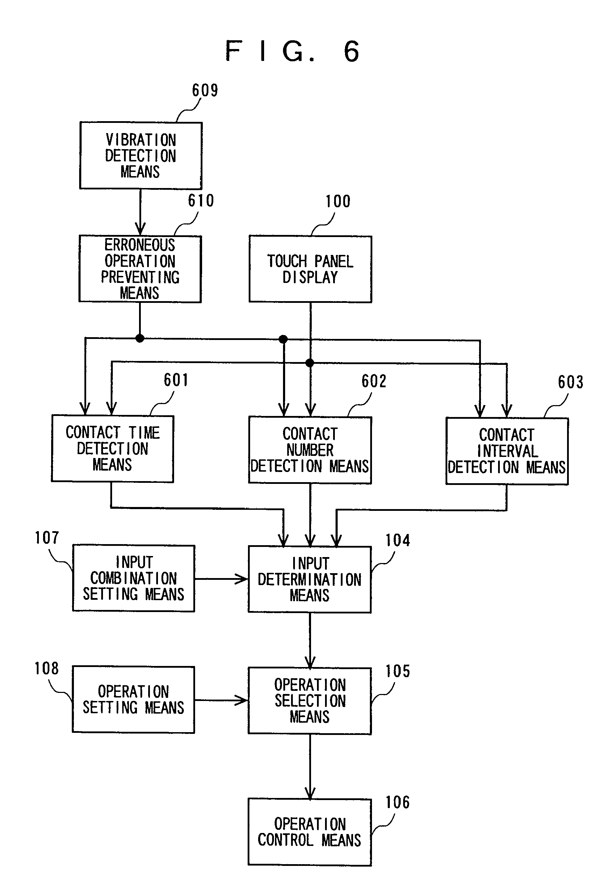

Next, a structure of a command input device according to a second embodiment of the present invention is illustrated in FIG. 6.

In FIG. 6, the command input device includes: a touch panel display 100; contact time detection means 601 for detecting a time period for which a finger is in continual contact with the touch panel display 100; contact number detection means 602 for detecting the number of times a finger touched the touch panel display 100; contact interval detection means 603 for detecting a time period between when the finger is detached from the touch panel display 100 and when a finger is brought into contact therewith afterwards; input determination means 104 for determining an input command based on detection results obtained from the contact time detection means 601, the contact number detection means 602, and the contact interval detection means 603; operation selection means 105 for selecting, among predetermined operations, an operation corresponding to the input command determined by the input determination means 104 based on the input command determined by the input determination means; operation control means 106 for executing the operation selected by the operation selection means 105; input combination setting means 107 for arbitrarily setting association relationships between the determination results obtained from the contact time detection means 601, the contact number detection means 602, and the contact interval detection means 603 and the input command determined by the input determination means 104; operation setting means 108 for arbitrarily setting association relationships between the input command determined by the input determination means 104 and the operation selected by the operation selection means 105; vibration detection means 609 for detecting vibration; and erroneous operation preventing means 610 for controlling the contact time detection means 601, the contact number detection means 602, and the contact interval detection means 603 in accordance with a detection result obtained from the vibration detection means 609 for preventing an erroneous operation due to chattering. Note that, in FIG. 6, components similar to the components in FIG. 1 are provided with the same reference numerals and the description thereof is omitted.

The operation of the command input device of the present embodiment configured as above is described.

The contact time detection means 601, the contact number detection means 602, and the contact interval detection means 603 of the present embodiment have a function for avoiding an erroneous operation due to chattering (a phenomenon in which, when a user's finger touches or is detached from the touch panel display 100, the finger transiently touches or is detached therefrom).

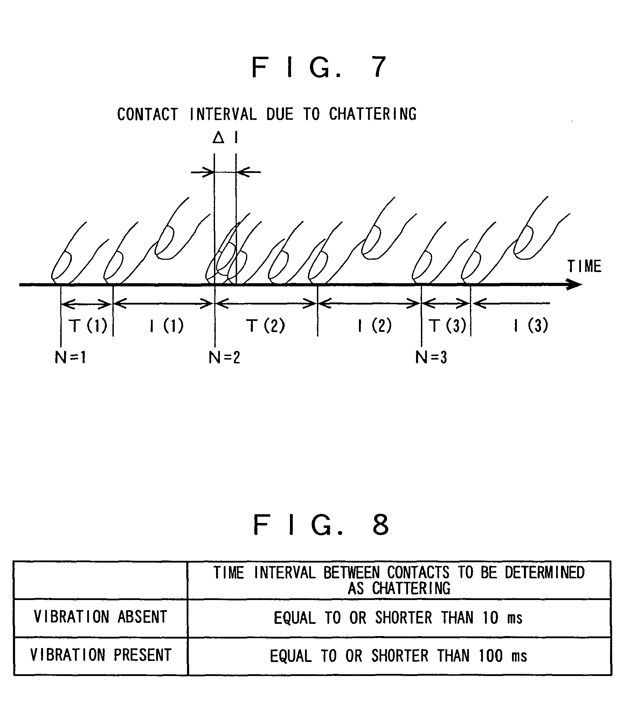

When chattering occurs, as shown in FIG. 7, a finger is transiently detached (ΔI) from the touch panel display 100 against the user's intention. Here, if the contact time detection means, the contact number detection means, and the contact interval detection means process such a finger action as a command input from the user, an erroneous operation will occur. Specifically, T(2) detected by the contact time detection means is nearly 0, N detected by the contact number detection means is larger by 1 than that of the expected, and I (2) detected by the contact interval detection means is ΔI. As a result, the determination result obtained from the input determination means is not that which the user has intended.

Therefore, in order to prevent the above-described erroneous operation, the contact time detection means 601, the contact number detection means 602, and the contact interval detection means 603 of the present embodiment are set such that a small time interval between contacts (e. g. , equal to or shorter than 10 ms) is determined as due to chattering, and thus not to reflect this to a detection result. Consequently, even if chattering occurs, an erroneous operation does not take place.

Incidentally, in the case where the command input device of the present embodiment is applied to an on-vehicle navigation device, due to vibration of a vehicle when moving, chattering occurs more easily and the time interval between contacts ΔI due to chattering would be bigger compared to when the vehicle is at a stop. Therefore, in the present embodiment, the vibration detection means 609 is installed in the vehicle or the command input device, so that the erroneous operation preventing means 610 is allowed to control, according to the detection result, the time interval between contacts ΔI by which the contact time detection means 601, the contact number detection means 602, and the contact interval detection means 603 determine the effect of chattering. More specifically, when vibration is not detected by the vibration detection means 609, the erroneous operation preventing means 610 sets, based on the table exemplary shown in FIG. 8, the time interval between contacts by which the effect of chattering is determined so as to be equal to or shorter than 10 ms, and when vibration is detected by the vibration detection means 609, the time interval between contacts by which the effect of chattering is determined so as to be equal to or shorter than 100 ms. Consequently, a chattering effect can be effectively prevented even when the vehicle is moving.

Although FIG. 8 illustrates an example where the time interval between contacts by which the effect of chattering is determined is controlled in two ways in accordance with the presence or absence of vibration, the present invention is not restricted thereto, and the time interval between contacts by which the effect of chattering is determined may be controlled in three ways, for example.

As aforementioned, according to the command input device of the second embodiment in the present invention, it is possible to achieve an optimum chattering effect preventing process in accordance with a state of the vehicle by providing the vibration detection means for detecting vibration and the erroneous operation preventing means for, in response to the detection result obtained from the vibration detection means, preventing an erroneous operation due to chattering.

### INDUSTRIAL APPLICABILITY

The present invention is ideal for a car navigation device employing a touch panel display, for example.

## Claims

1. A command input device comprising:
contact time detection means for detecting a time period for which a finger or a pen is in continual contact with a touch panel display;
contact number detection means for detecting the number of times the finger or the pen touched the touch panel display;
contact interval detection means for detecting a time period between when the finger or the pen is detached from the touch panel display and when the finger or the pen is brought into contact therewith afterwards;
input determination means for determining an input command based on the detection results obtained from the contact time detection means, the contact number detection means, and the contact interval detection means;
operation selection means for selecting, among predetermined operations, an operation associated with the input command based on the input command determined by the input determination means; and
operation control means for executing the operation selected by the operation selection means.

2. The command input device according to claim 1, wherein the detection result obtained from the input determination means is unaffected by a contact position of the finger or the pen on the touch panel display.

3. The command input device according to claim 1 further comprising input combination setting means for arbitrarily setting association relationships between the detection results obtained from the contact time detection means, the contact number detection means, and the contact interval detection means and the input command determined, based on the detection results, by the input determination means.

4. The command input device according to claim 1 further comprising operation setting means for arbitrarily setting association relationships between the input command determined by the input determination means and the operation selected, based on the input command, by the operation selection means.

5. The command input device according to claim 1 further comprising:
vibration detection means for detecting vibration; and
erroneous operation preventing means for preventing a chattering effect when the finger or the pen touches the touch panel,
wherein a time interval between contacts of the finger or the pen determined, by the erroneous operation preventing means, as chattering varies based on the detection result obtained from the vibration detection means.

6. The command input device according to claim 1, wherein the contact time detection means distinguishes between two or more states in accordance with the time length of continual contact.

7. The command input device according to claim 1, wherein the contact time detection means is capable of arbitrarily setting a length by which the time period of continual contact is distinguished.

8. The command input device according to claim 1, wherein the contact interval detection means is capable of arbitrarily setting a time period for a command input to be ended.
